# FASCICULE DE BREVET EUROPEEN

(11) **EP 2 129 893 B1**
(45) Date de publication et mention de la délivrance du brevet: **03.05.2017**
(21) Numéro de dépôt: 08788035.7
(22) Date de dépôt: 25.03.2008
(51) Int. Cl.: F02C 7/14, F02C 7/12

(54) **SYSTEME DE REFROIDISSEMENT ET DE REGULATION EN TEMPERATURE D'EQUIPEMENTS D'UN ENSEMBLE PROPULSIF D'AERONEF**
SYSTEM ZUR KÜHLUNG UND TEMPERATURANPASSUNG VON GERÄTEN IN DER ANTRIEBSANORDNUNG EINES FLUGZEUGES
SYSTEM FOR COOLING AND ADJUSTING THE TEMPERATURE OF APPARATUSES IN THE PROPULSION ASSEMBLY OF AN AIRCRAFT

(30) Priorité: 28.03.2007 FR 0754089
(43) Date de publication de la demande: 09.12.2009
(73) Titulaire: Airbus Operations (Société par actions simplifiée), 31060 Toulouse (FR)
(72) Inventeur: BULIN, Guillaume, F-31700 Blagnac (FR); PUGLIESE, Stéphane, F-31240 L'union (FR); FABRE, Christian, F-31170 Tournefeuille (FR); OBERLE, Patrick, F-82600 Verdun Sur Garonne (FR)
(74) Mandataire: Gicquel, Olivier Yves Gérard
(86) Numéro de dépôt international: PCT/FR2008/050508
(87) Numéro de publication internationale: WO 2008/132400

(56) Documents cités:
- EP-A- 0 391 609
- WO-A-02/16743
- DE-B- 1 281 270
- GB-A- 2 095 756
- GB-A- 2 131 094
- US-B1- 6 182 435

## Description

La présente invention concerne un système de refroidissement et de régulation en température d'équipements d'un ensemble propulsif d'aéronef, l'ensemble propulsif incorporant le système et l'aéronef qui en est équipé.

Un ensemble propulsif d'aéronef tel qu'un turboréacteur comporte plusieurs systèmes nécessitant d'être refroidis ou maintenus à une température de fonctionnement optimale comme la turbomachine et les équipements électriques comme le générateur électrique de l'aéronef.

En outre, il est nécessaire de limiter la température de l'huile de lubrification des parties mobiles de la turbomachine et d'évacuer la chaleur rejetée par les paliers et les pièces en frottement.

Les systèmes traditionnellement refroidis ou régulés en température par un circuit de refroidissement au niveau du moteur sont les générateurs électriques couplés au moteur (turbomachine) et les parties en mouvement du moteur.

On connaît en outre deux principes de refroidissement généralement utilisés au niveau des ensembles propulsifs.

Le premier consiste en un refroidissement par échange de chaleur huile/air, un échangeur de chaleur étant disposé dans un circuit de dérivation prélevant de l'air dans le flux secondaire froid du moteur.

Ce premier principe pénalise l'efficacité de l'ensemble propulsif du fait du prélèvement d'air sur le moteur et/ou de l'introduction d'une perte de charge aérodynamique supplémentaire. Pour limiter cette pénalité, il est couramment admis d'intégrer à l'échangeur une vanne de régulation du débit d'air prélevé au moteur. Néanmoins, ces vannes de régulation dégradent la fiabilité globale du système de refroidissement et sont à l'origine de nombreux problèmes en service (apparition de criques sur les vannes et les conduits du fait de sollicitations vibratoires aérodynamiques, apparition de pannes du système d'asservissement de la vanne, etc.).

En outre, ce premier principe pénalise le traitement acoustique de la surface interne du flux secondaire. En effet, plus la taille de l'échangeur à intégrer est importante et plus l'entrée d'air (et la sortie d'air si le flux d'air prélevé est rejeté dans le flux secondaire) sera de dimensions importantes. Or, l'entrée d'air et la sortie d'air ne possèdent pas de traitement acoustique et de ce fait on cherche à maintenir leurs dimensions réduites pour lutter contre le bruit des moteurs.

La présence de l'échangeur est défavorable du fait qu'elle s'oppose à la réduction des dimensions des entrée et sortie d'air.

Le second principe est d'utiliser le carburant alimentant le moteur comme fluide de refroidissement et, dans ce cas, on utilise un ou plusieurs échangeurs Fuel/Huile, traditionnellement de type échangeur à plaques ou échangeur à tubes qui sont intégrés dans l'ensemble propulsif.

Ces échangeurs permettent de dissiper l'énergie calorifique dans le fuel utilisé par le moteur.

Toutefois, le fuel ne doit pas être réchauffé au-delà d'une certaine température (∼150°C) pour ne pas entraîner de risque de cokéfaction. C'est pour cela que certains ensembles propulsifs prélèvent dans les réservoirs de l'avion une quantité de fuel largement plus importante que le besoin propre du moteur pour la combustion, et réinjectent dans les réservoirs le fuel réchauffé non utilisé.

Comme pour les dispositifs échangeur air/huile, les échangeurs fuel/huile ne peuvent généralement pas être disposés à proximité des dispositifs à refroidir et là encore les circuits d'huile doivent être prolongés entre les dispositifs à refroidir et les échangeurs.

En conclusion, quelque-soit le principe utilisé, les dispositifs à refroidir, ou sources de chaleur, sont refroidis et régulées par le biais de leurs propres circuits de lubrification ce qui implique de prolonger ces circuit vers les échangeurs éloignés de ces sources de chaleur.

En outre les circuits d'huile ont dans l'art antérieur une double fonction de lubrification et de refroidissement.

Du fait de cette double fonction, les circuits d'huile des différents composants à refroidir doivent impérativement être ségrégés pour limiter les risques de pannes communes (contamination d'un circuit d'huile entraînant la contamination d'un autre circuit, fuite d'un circuit d'huile entraînant la perte totale des circuits, etc.) ce qui accroît encore les longueurs et nombre de tuyaux de circulation d'huile.

En outre, dans la mesure où chaque circuit de refroidissement est dédié à un équipement précis (moteur ou générateur électrique), chaque circuit doit posséder au moins un dispositif de refroidissement dimensionné pour le cas de refroidissement le plus contraignant (exemple : Consommation électrique maximale dans des conditions « temps chaud » avec l'avion au sol). Or, vu que chaque circuit de refroidissement ne subit pas nécessairement le cas le plus contraignant aux même phases de vol, les dispositifs de refroidissement ne sont quasiment jamais utilisés à 100% en même temps. Il y a alors une surcapacité de refroidissement installée sur l'ensemble propulsif qui, dans la mesure ou la règle de ségrégation doit être respectée, pénalise les performances de l'ensemble propulsif et accroît sa masse et son volume.

De plus, le fait que dans les dispositifs connus, le circuit de refroidissement constitue en parallèle le circuit de lubrification des sources de chaleur entraîne plusieurs contraintes d'intégration dudit circuit. Tout d'abord, dans la mesure où le circuit d'huile doit relié la source de chaleur aux différents échangeurs qui ne sont pas nécessairement à proximité, le volume, la longueur et la complexité du circuit d'huile impose des pertes de charge dans le circuit et un volume d'huile importants. Par ailleurs, la circulation d'huile tout autour du moteur augmente les risques de fuite, de contamination et de feu de l'ensemble propulsif, ce qui traduit une certaine vulnérabilité du système de refroidissement et de l'ensemble propulsif associé.

Enfin, l'huile de lubrification n'est pas le liquide le plus approprié pour le transport d'énergie calorifique du fait de sa viscosité importante et de sa capacité calorifique non optimale et le fait que les circuits de refroidissement de chaque source de chaleur soit refroidie et régulée en température par le biais de son propre circuit de lubrification impose que ce dernier soit le plus court possible pour limiter les pertes de charge et les risques de fuites. Il est alors peu envisageable de connecter le ou les systèmes de refroidissement des divers composantes de l'ensemble propulsif et encore moins de les connecter avec ceux de l'avion. Ainsi, aucune synergie entre les capacités de refroidissement de l'avion et de l'ensemble propulsif ainsi que entre les sources de chaleur de l'avion et de l'ensemble propulsif n'est possible, ce qui empêche toute mise en commun des dispositifs thermiques. Or, de telles synergies autoriseraient une optimisation plus poussée des systèmes de refroidissement.

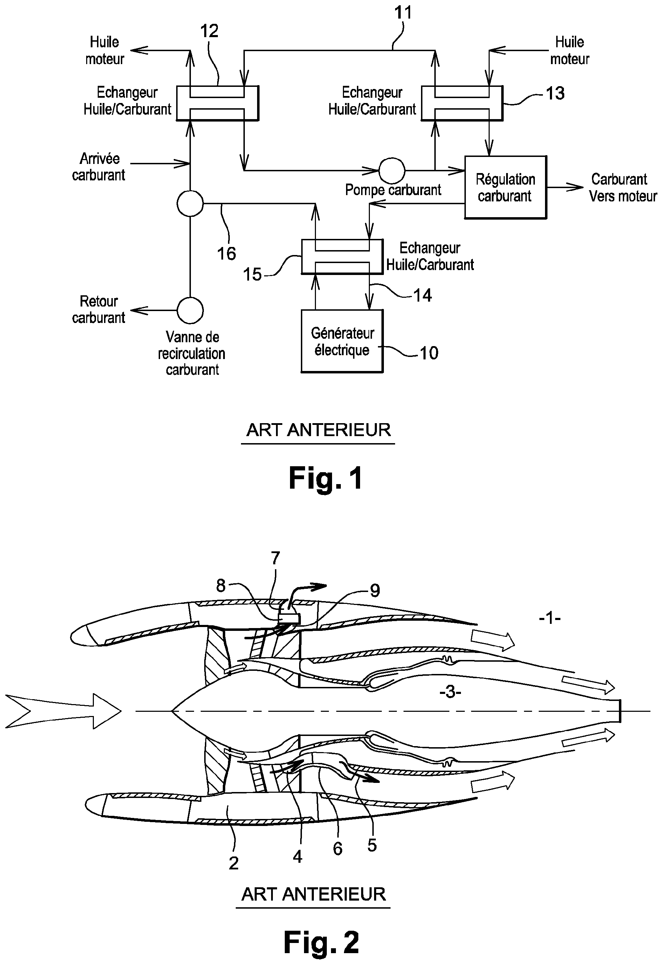

Un exemple de système de l'art antérieur est représenté à la figure 1.

Dans cet exemple, le circuit 11 d'huile de lubrification court dans la nacelle du moteur pour atteindre des moyens de refroidissement 12, 13 de type échangeur fuel/huile, le circuit d'huile de lubrification 14 du générateur électrique s'étend jusqu'à des moyens de refroidissement 15 de type fuel/huile disposés dans un circuit de re-circulation de fuel d'alimentation moteur.

La figure 2 également de l'art antérieur représente un moteur d'aéronef 1 comportant une nacelle 2 et un ensemble propulsif 3 et pourvus de moyens échangeurs 6, 8 air/huile disposés dans des conduits 7, 9 et 4, 5 dérivant une partie du flux secondaire pour refroidir les échangeurs.

La présente invention a principalement pour but de minimiser la circulation de l'huile de lubrification des équipements à l'extérieur des équipements à refroidir et de séparer la fonction lubrification de la fonction refroidissement.

Elle permet en outre une mise en commun des moyens de refroidissement entre divers équipements en mutualisant les capacités de refroidissement de chaque composant et de permettre des échanges de chaleur entre des sources dissipatives et en particulier des sources dissipatives dont les besoins de refroidissement sont différents selon les phases de fonctionnement de l'aéronef.

Le document GB 2 131 094 décrit un ensemble propulsif selon le préambule de la revendication 1.

La présente invention prévoit un ensemble propulsif d'aéronef selon la revendication 1. Le système de refroidissement et de régulation en température d'équipements de l'ensemble propulsif d'aéronef, comporte des premiers moyens d'échange de chaleur entre des circuits de lubrification d'au moins deux desdits équipements et un fluide caloporteur contenu dans un circuit fermé, des seconds moyens d'échange de chaleur entre le fluide caloporteur et au moins un fluide de refroidissement, les premiers moyens d'échange de chaleur étant disposés localement au niveau de chacun desdits équipements, les seconds moyens d'échange de chaleur étant distants desdits premiers moyens, le circuit fermé circulant entre au moins deux des équipements et lesdits seconds moyens.

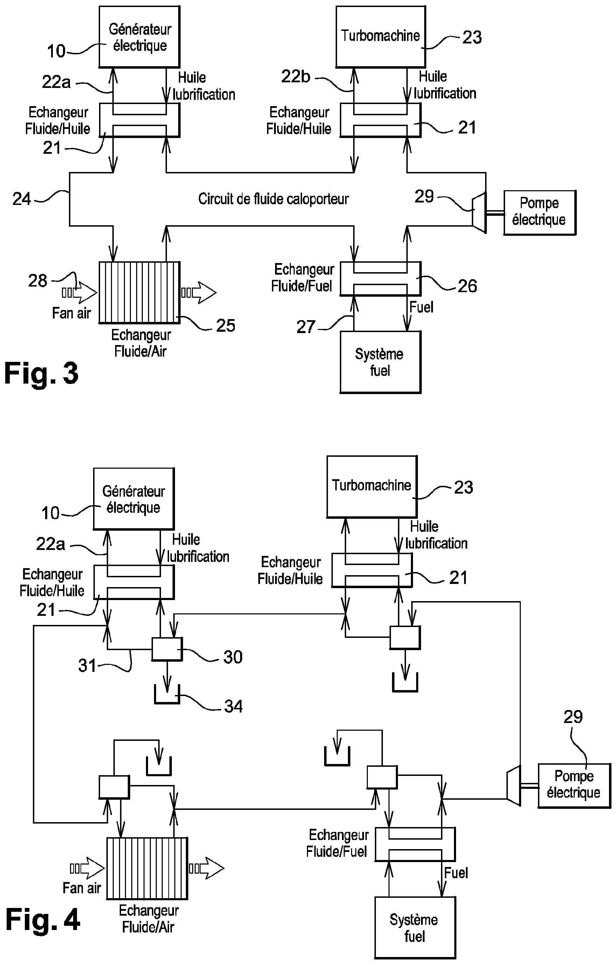

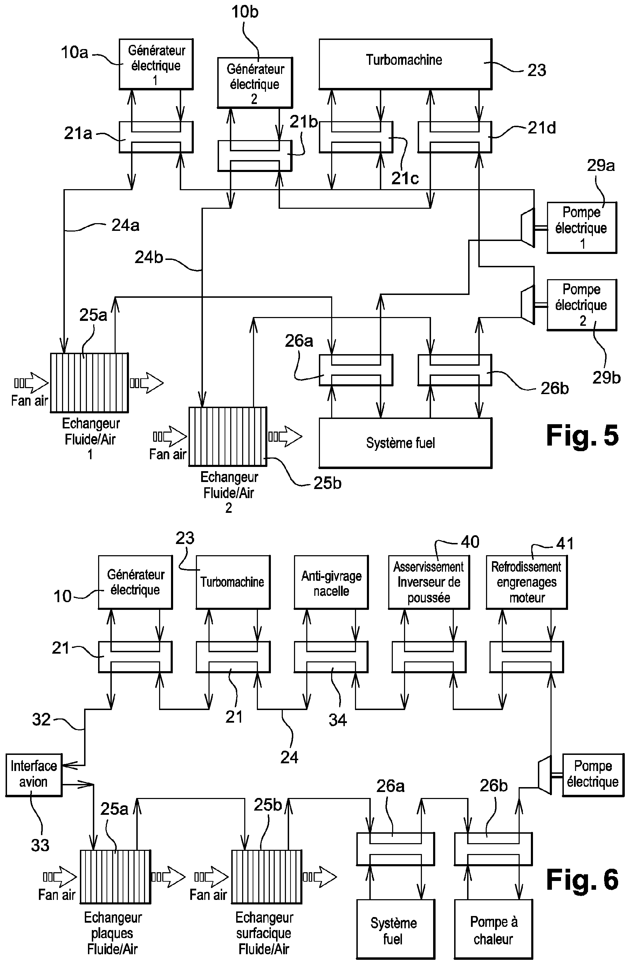

D'autres caractéristiques et avantages de l'invention seront apparents à la lecture de la description qui suit d'exemples non limitatifs de réalisation de cette invention en référence aux dessins qui représentent:
en figure 1: un exemple de système de refroidissement d'équipements de l'art antérieur;
en figure 2: un exemple d'ensemble propulsif d'aéronef pourvu d'échangeurs air/fluide;
en figure 3: un premier exemple schématique de réalisation d'un système de refroidissement;
en figure 4: un deuxième exemple de réalisation d'un système de refroidissement;
en figure 5: un exemple de réalisation d'un système redondant selon l'invention;
en figure 6: un exemple schématique de système de refroidissement comportant un interface avec des équipements extérieurs à l'ensemble propulsif.

Des exemples de systèmes de refroidissement et de régulation en température d'équipements 10, 23 d'un ensemble propulsif 1 d'aéronef sont représentés aux figures 3 à 6.

L'exemple dont le schéma est représenté à la figure 1 est le schéma de base du système de l'invention qui comporte des premiers moyens d'échange de chaleur 21 entre des circuits de lubrification 22a, 22b d'au moins deux équipements qui sont prioritairement le générateur électrique 10 de l'ensemble propulsif et la turbomachine 23 elle même.

Ces deux équipements ont des besoins importants en lubrification et des contraintes de fonctionnement élevées puisque le générateur électrique 10 a pour rôle de fournir la puissance électrique de l'aéronef et la turbomachine de fournir la poussée déplaçant ce dernier.

Pour optimiser le refroidissement de ces deux équipements sans pénaliser leur lubrification, la présente invention dispose au plus près de ces équipements les premiers moyens d'échange de chaleur 21 et confie à un fluide caloporteur contenu dans un circuit fermé 24 le transport des calories à évacuer vers des seconds moyens d'échange de chaleur 25, 26 entre le fluide caloporteur et au moins un fluide de refroidissement 27, 28.

Ainsi, les premiers moyens d'échange de chaleur 21 sont disposés localement au niveau de chacun desdits équipements 10, 23 et les seconds moyens d'échange de chaleur 25, 26 sont disposés au plus près de l'endroit où circule le fluide de refroidissement, les seconds moyens d'échange de chaleur 25, 26 étant ainsi distants desdits premiers moyens 21.

Un premier bénéfice de l'invention est que, le circuit fermé 24 circulant entre au moins deux des équipements 10, 23 et lesdits seconds moyens 25, 26, les équipements partagent les moyens de refroidissement. En outre, les premiers moyens peuvent rester au plus près des équipements et seconds moyens peuvent être disposés aux endroits les plus propices au refroidissement sans prolonger les circuits de lubrification des équipements.

Les premiers moyens d'échange de chaleur 22a, 22b sont des échangeurs fluide caloporteur/huile associés aux équipements 10, 23.

Le fluide caloporteur est ainsi un fluide adapté à cette fonction.

De préférence, le fluide caloporteur sera non toxique, non inflammable, de faible viscosité et de bonne capacité calorifique. A titre d'exemple non limitatif, le fluide caloporteur pourra être de l'eau pure ou mélangée à un ou plusieurs additifs améliorant ses propriétés par exemple de l'eau additionnée de glycol pour éviter la solidification du fluide caloporteur en cas de très basse température d'utilisation.

Selon l'exemple, le circuit de fluide caloporteur transite par plusieurs échangeurs de chaleur de type liquide/liquide, chaque échangeur étant spécifique à une source de chaleur à refroidir et permettant l'échange d'énergie calorifique entre le fluide caloporteur du circuit de refroidissement et l'huile de lubrification de cette source de chaleur.

Ces échangeurs de chaleur entre les sources chaudes et le circuit de fluide caloporteur pourront être situés soit à proximité des sources chaudes, soit sur la paroi ou au sein des sources chaudes, soit à tout autre endroit de l'ensemble propulsif pouvant présenter un intérêt en terme d'intégration du système.

Un exemple de réalisation non limitatif est de positionner au sein du réservoir d'huile de lubrification de la source chaude concernée un échangeur de chaleur en contact avec l'huile.

L'échange de chaleur est alors directement effectué au sein de la source chaude et ne nécessite donc pas de circuit de lubrification transitant en dehors de l'enveloppe de ladite source et cheminant autour de l'ensemble propulsif.

Pour faire circuler le fluide caloporteur, le circuit fermé 24 comporte une pompe 29 de circulation du fluide caloporteur.

Toujours selon l'exemple de la figure 3, les seconds moyens d'échange de chaleur comprennent au moins un échangeur fluide caloporteur/air 25 en contact avec au moins une partie 28 du flux d'air secondaire se déplaçant entre la nacelle et le moteur de l'ensemble propulsif.

Cet échangeur peut être notamment disposé à la place d'un échangeur huile/air de l'art antérieur comme ceux représentés en figure 2.

Alternativement ou en parallèle, les seconds moyens d'échange de chaleur peuvent comprendre au moins un échangeur fluide caloporteur/fuel 26 disposé dans le circuit d'alimentation en carburant 27 de l'ensemble propulsif.

Le circuit d'alimentation en carburant peut dans ce cas comporter comme dans l'art antérieur une re-circulation du fuel vers le réservoir pour limiter l'accroissement de température causé par l'échange de chaleur.

Comme vu ci-dessus, les équipements principaux à refroidir comprennent au moins un générateur électrique 10 et la turbomachine 23 de l'ensemble propulsif.

En figure 6, l'invention est toutefois appliquée notamment au refroidissement d'autres éléments de l'ensemble propulsif et notamment aux dispositifs d'asservissement des inverseurs de poussée 40 et aux engrenages moteur 41.

Ceci est rendu possible par l'utilisation d'un circuit 24 cheminant entre les équipements au lieu d'avoir, pour chaque équipement un circuit de lubrification prolongé vers des échangeurs.

Le système représenté à la figure 4 est perfectionné en ce qu'au niveau d'au moins un des premiers moyens d'échange de chaleur 21, le circuit fermé comporte un dispositif de régulation adapté à réguler la quantité de fluide caloporteur admis dans ce premier moyen d'échange de chaleur 21.

Le dispositif de régulation comprend une vanne 30 distribuant le fluide caloporteur vers le premier échangeur 21 ou vers un conduit de court-circuit 31 dudit au moins un premier moyen d'échange de chaleur.

Un dispositif de consigne (non représenté sur la figure 4) pilote la vanne 30 en fonction de paramètres de régulation donnés tels que la température extérieure, la température de l'huile et la phase de fonctionnement du dispositif.

Par ailleurs un dispositif 34 de retour de fluide caloporteur permet de retourner au réservoir de fluide l'excédent de débit contrôlé par le dispositif de régulation.

La figure 5 représente un système de refroidissement d'un ensemble propulsif qui comporte au moins deux systèmes de refroidissement décrits ci-dessus, les deux systèmes étant indépendants et ségrégués.

Un premier système comporte un premier circuit 24a qui distribue un premier échangeur huile/fluide 21a d'un premier générateur électrique de l'ensemble propulsif et un premier échangeur huile/fluide 21 c de la turbomachine et qui échange les calories transmises avec un premier second échangeur de type fluide/air 25a et un premier second échangeur de type fluide/fuel 26a.

La circulation du fluide caloporteur de ce premier circuit est assurée par une première pompe 29a.

Un second système comporte un second circuit 24b qui distribue un second échangeur huile/fluide 21b d'un second générateur électrique de l'ensemble propulsif et un second échangeur huile/fluide 21d de la turbomachine et qui échange les calories transmises avec un second second échangeur de type fluide/air 25b et un second second échangeur de type fluide/fuel 26b.

La circulation du fluide caloporteur de ce second circuit est assurée par une seconde pompe 29b.

Pour éviter tout risque de fuite commune ou de rupture des deux circuits en cas de choc ou d'impact d'un oiseau par exemple, les deux circuits sont ségrégués notamment par leur éloignement l'un de l'autre, par exemple en les disposant diamétralement opposés par rapport à l'axe de l'ensemble propulsif.

Dans cet exemple, il est à noter que les deux systèmes de refroidissement sont disposés en sorte de se compléter pour assurer une redondance au niveau des équipements et en particulier au niveau de la turbomachine 23 pour laquelle les circuits traversent des échangeurs distincts.

Là encore, en cas de problème sur l'un des circuits, l'autre reste opérationnel ce qui permet de continuer d'utiliser l'ensemble propulsif, certes en limitant la puissance de la turbomachine pour limiter son échauffement.

L'usage d'un circuit de fluide caloporteur permet en outre d'utiliser le fluide caloporteur pour réchauffer des éléments de l'ensemble propulsif et en particulier, selon un mode de réalisation particulier de l'invention, le circuit fermé 24 distribue en outre au moins un module de réchauffage anti-givrage 34 de l'ensemble propulsif.

Ce module peut être, de manière connue en soi, disposé dans la lèvre d'entrée d'air du moteur.

Dans l'exemple de la figure 6, le système est en outre relié à un réseau de fluide caloporteur 32 desservant des équipements de l'aéronef extérieurs à l'ensemble propulsif au travers d'un interface 33.

De tels équipements peuvent être des équipements tels que les équipements de dégivrage des ailes utilisant la chaleur transmise par le fluide caloporteur, des équipements nécessitant un refroidissement tels que le dispositif de conditionnement d'air, la liaison entre le système et les échangeurs du système de conditionnement d'air permettant de dissiper l'énergie calorifique du système de conditionnement d'air en utilisant les capacités de refroidissement de l'ensemble propulsif.

En effet, durant ces phases d'attente au sol, si les ensembles propulsifs sont en fonctionnement, il serait tout à fait envisageable de dissiper dans le flux d'air traversant les turbomachines l'énergie calorifique issue du conditionnement d'air au travers des capacités de refroidissement disponibles des systèmes de refroidissement des ensembles propulsifs.

L'invention n'est pas limitée aux exemples décrits et englobe toute variante entrant dans le champ des revendications.

## Revendications

1. Ensemble propulsif d'aéronef comportant des circuits de lubrification des équipements (10,23), des circuits de fluide de refroidissement et au moins un système de refroidissement et de régulation en température d'équipements (10, 23), ledit système de refroidissement et de régulation en température comportant des premiers (21) et seconds (25,26) moyens d'échange de chaleur et un circuit fermé (24) de fluide caloporteur, les premiers moyens d'échange de chaleur (21) étant disposés entre des circuits de lubrification (22a, 22b) d'au moins deux desdits équipements et le fluide caloporteur contenu dans le circuit fermé (24), les seconds moyens d'échange de chaleur (25, 26) étant disposés entre le fluide caloporteur et au moins un desdits circuits de fluide de refroidissement (27, 28), les premiers moyens d'échange de chaleur (21) étant disposés localement au niveau de chacun desdits équipements (10, 23), les seconds moyens d'échange de chaleur (25, 26) étant distants desdits premiers moyens (21), le circuit fermé (24) circulant entre au moins deux des équipements (10, 23) et lesdits seconds moyens (25,26),
l'ensemble propulsif étant **caractérisé en ce qu'**il comporte au moins deux desdits systèmes de refroidissement et de régulation en température, lesdits systèmes étant indépendantes et ségrégués.

2. L'ensemble propulsif d'aéronef selon la revendication 1 **caractérisé en ce que** les premiers moyens d'échange de chaleur (22a, 22b) sont des échangeurs fluide caloporteur/huile associés aux équipements (10, 23).

3. L'ensemble propulsif d'aéronef selon la revendication 1 ou 2 **caractérisé en ce que** les seconds moyens d'échange de chaleur comprennent au moins un échangeur fluide caloporteur/air (25) en contact avec au moins une partie (28) du flux d'air secondaire se déplaçant entre la nacelle et le moteur de l'ensemble propulsif.

4. L'ensemble propulsif d'aéronef selon l'une des revendications précédentes **caractérisé en ce que** les seconds moyens d'échange de chaleur comprennent au moins un échangeur fluide caloporteur/fuel (26) disposé dans le circuit d'alimentation en carburant (27) de l'ensemble propulsif.

5. L'ensemble propulsif d'aéronef selon l'une des revendications précédentes **caractérisé en ce que** les équipements comprennent au moins un générateur électrique (10) et la turbomachine (23) de l'ensemble propulsif.

6. Aéronef comportant au moins un ensemble propulsif selon l'une des revendications 1 à 5 **caractérisé en ce que** le circuit fermé (24) distribue en outre au moins un module de réchauffage anti-givrage (34) de l'ensemble propulsif.

7. Aéronef comportant au moins un ensemble propulsif selon l'une des revendications 1 à 5 **caractérisé en ce que** ledit système est relié à un réseau de fluide caloporteur (32) desservant des équipements de l'aéronef extérieurs à l'ensemble propulsif.

8. Aéronef selon la revendication 7 pour lequel le circuit de fluide caloporteur est relié à des échangeurs du système de conditionnement d'air permettant de dissiper l'énergie calorifique du système de conditionnement d'air au travers des capacités de refroidissement de l'ensemble propulsif.

## Patentansprüche

1. Luftfahrzeug-Antriebseinheit, die Schmierkreisläufe der Geräte (10, 23), Kühlfluidkreisläufe und mindestens ein Kühl- und Temperaturregelungssystem von Geräten (10, 23) aufweist, wobei das Kühl- und Temperaturregelungssystem erste (21) und zweite (25, 26) Wärmetauschereinrichtungen und einen geschlossenen Wärmeträgerfluidkreislauf (24) aufweist, wobei die ersten Wärmetauschereinrichtungen (21) zwischen Schmierkreisläufen (22a, 22b) von mindestens zwei der Geräte und dem im geschlossenen Kreislauf enthaltenen Wärmeträgerfluid (24) angeordnet sind, wobei die zweiten Wärmetauschereinrichtungen (25, 26) zwischen dem Wärmeträgerfluid und mindestens einem der Kühlfluidkreisläufe (27, 28) angeordnet sind, wobei die ersten Wärmetauschereinrichtungen (21) lokal im Bereich jedes der Geräte (10, 23) angeordnet sind, wobei die zweiten Wärmetauschereinrichtungen (25, 26) von den ersten Einrichtungen (21) entfernt sind, wobei der geschlossene Kreislauf (24) zwischen mindestens zwei der Geräte (10, 23) und den zweiten Einrichtungen (25, 26) zirkuliert, wobei die Antriebseinheit **dadurch gekennzeichnet ist, dass** sie mindestens zwei der Kühl- und Temperaturregelungssysteme aufweist, wobei die Systeme unabhängig und abgetrennt sind.

2. Luftfahrzeug-Antriebseinheit nach Anspruch 1, **dadurch gekennzeichnet, dass** die ersten Wärmetauschereinrichtungen (22a, 22b) Wärmeträgerfluid/Öl-Tauscher sind, die den Geräten (10, 23) zugeordnet sind.

3. Luftfahrzeug-Antriebseinheit nach Anspruch 1 oder 2, **dadurch gekennzeichnet, dass** die zweiten Wärmetauschereinrichtungen mindestens einen Wärmeträgerfluid/Luft-Tauscher (25) in Kontakt mit mindestens einem Teil (28) des Sekundärluftstroms enthalten, der sich zwischen der Gondel und dem Motor der Antriebseinheit bewegt.

4. Luftfahrzeug-Antriebseinheit nach einem der vorhergehenden Ansprüche, **dadurch gekennzeichnet, dass** die zweiten Wärmetauschereinrichtungen mindestens einen Wärmeträgerfluid/Treibstoff-Tauscher (26) enthalten, der im Kraftstoffversorgungskreislauf (27) der Antriebseinheit angeordnet ist.

5. Luftfahrzeug-Antriebseinheit nach einem der vorhergehenden Ansprüche, **dadurch gekennzeichnet, dass** die Geräte mindestens einen elektrischen Generator (10) und das Turbinentriebwerk (23) der Antriebseinheit enthalten.

6. Luftfahrzeug, das mindestens eine Antriebseinheit nach einem der Ansprüche 1 bis 5 aufweist, **dadurch gekennzeichnet, dass** der geschlossene Kreislauf (24) außerdem mindestens ein Vereisungsschutz-Vorwärmungsmodul (34) der Antriebseinheit verteilt.

7. Luftfahrzeug, das mindestens eine Antriebseinheit nach einem der Ansprüche 1 bis 5 aufweist, **dadurch gekennzeichnet, dass** das System mit einem Wärmeträgerfluidnetz (32) verbunden ist, das Geräte des Luftfahrzeug außerhalb der Antriebseinheit versorgt.

8. Luftfahrzeug nach Anspruch 7, bei dem der Wärmeträgerfluidkreislauf mit Tauschern des Luftaufbereitungssystems verbunden ist, die es erlauben, die Wärmeenergie des Luftaufbereitungssystems über Kühlkapazitäten der Antriebseinheit abzuleiten.

## Claims

1. Aircraft propulsion assembly comprising lubricating circuits of equipment (10, 23), cooling fluid circuits and at least one system for cooling and regulating the temperature of equipment (10, 23), the said cooling and temperature regulating system comprising first (21) and second (25, 26) heat exchange means and a closed heat transfer fluid circuit (24), the first heat exchange means (21) being arranged between lubricating circuits (22a, 22b) for at least two of the said items of equipment and the heat transfer fluid contained in the closed circuit (24), the second heat exchange means (25, 26) being arranged between the heat transfer fluid and at least one of the said cooling fluid circuits (27, 28), the first heat exchange means (21) being arranged locally in the vicinity of each of the said items of equipment (10, 23), the second heat exchange means (25, 26) being remote from the said first means (21), the closed circuit (24) circulating between at least two of the items of equipment (10, 23) and the said second means (25, 26), the propulsion assembly being **characterized in that** it comprises at least two of the said cooling and temperature regulating systems, the said systems being independent and segregated.

2. Aircraft propulsion assembly according to Claim 1, **characterized in that** the first heat exchange means (22a, 22b) are heat transfer fluid/oil exchangers associated with the items of equipment (10, 23).

3. Aircraft propulsion assembly according to Claim 1 or 2, **characterized in that** the second heat exchange means comprise at least one heat transfer fluid/air exchanger (25) in contact with at least one part (28) of the secondary air stream moving between the nacelle and the engine of the propulsion assembly.

4. Aircraft propulsion assembly according to one of the preceding claims, **characterized in that** the second heat exchange means comprise at least one heat transfer fluid/fuel exchanger (26) arranged in the fuel supply circuit (27) of the propulsion assembly.

5. Aircraft propulsion assembly according to one of the preceding claims, **characterized in that** the equipment comprises at least an electric generator (10) and the turbomachine (23) of the propulsion assembly.

6. Aircraft comprising at least one propulsion assembly according to one of Claims 1 to 5, **characterized in that** the closed circuit (24) furthermore distributes to at least one anti-icing warming module (34) of the propulsion assembly.

7. Aircraft comprising at least one propulsion assembly according to one of Claims 1 to 5, **characterized in that** the said system is connected to a heat transfer fluid network (32) serving aircraft equipment external to the propulsion assembly.

8. Aircraft according to Claim 7 for which the heat transfer fluid circuit is connected to exchangers of the air conditioning system so that the heat energy of the air conditioning system can be dissipated through the cooling capabilities of the propulsion assembly.
